# EUROPEAN PATENT APPLICATION

(11) **EP 4 382 325 A1**
(43) Date of publication of application: **12.06.2024**
(21) Application number: 22852246.2
(22) Date of filing: 03.08.2022
(51) Int. Cl.: B60H 1/00

(54) **VENTILATION AND AIR CONDITIONING APPARATUS, AND ENTERTAINMENT VEHICLE HAVING VENTILATION AND AIR CONDITIONING APPARATUS**

(30) Priority: 04.08.2021 CN 202110890392
(71) Applicant: Dometic Sweden AB, 171 54 Solna (SE); Dometic (Zhuhai) Technology Co., Ltd., Zhuhai, Guangdong 519041 (CN)
(72) Inventor: LIU, Sihu, Zhuhai, Guangdong 519041 (CN); SETHURAJ, Rammohan, 171 54 Solna (SE); KODISANA, Suresh, 171 54 Solna (SE); REN, Cong, Zhuhai, Guangdong 519041 (CN)
(74) Representative: Grosse, Felix Christopher
(86) International application number: PCT/CN2022/109994
(87) International publication number: WO 2023/011534

(57) **Abstract**

The present invention refers to a ventilation and air conditioning arrangement 1, in particular for a recreational vehicle like a camper, caravan or mobile home. The ventilation and air conditioning arrangement 1 comprises an air intake arrangement 10, an air exhaust arrangement 20 and an air conditioning unit 30. The air intake arrangement 10 is configured to define an intake air flow path IFP from the environment E of a confined space CS into the confined space CS in an installed state of the ventilation and air conditioning arrangement 1. The air exhaust arrangement 20 is configured to define an exhaust air flow path EFP from the confined space CS to the environment E of the confined space CS in an installed state of the ventilation and air conditioning arrangement 1. The air conditioning unit 30 comprises a first heat exchanging unit 32 and a second heat exchanging unit 34 coupled to each other via a refrigerant circuit containing a refrigerant. The first heat exchanging unit 32 is configured to transfer heat between intake air within the intake air flow path IFP and the refrigerant. The second heat exchanging unit 34 is configured to transfer heat between the refrigerant and exhaust air within the exhaust airflow path EFP and the refrigerant. Furthermore, the present invention refers to a recreational vehicle like a camper, caravan or mobile home comprising such a ventilation and air conditioning arrangement 1.

## Description

### Technical field

The present invention relates to a ventilation and air conditioning arrangement and a recreational vehicle with such a ventilation and air conditioning arrangement.

### Background

Ventilation and air conditioning arrangements are configured to provide a confined space, for example the interior of a recreational vehicle like a camper, caravan or mobile home with fresh and conditioned air from the environment of the confined space. Although various configurations for such ventilation and air condition units are commonly known, these known systems have a quite high energy consumption and an efficiency during conditioning processes which needs to be improved.

### Summary of the invention

In view of this, it is the scope of the present invention to provide a ventilation and air conditioning arrangement having an improved energy efficiency.

This scope is achieved by the advantageous ventilation and air conditioning arrangement according to claim 1. Preferable modifications for such an advantageous ventilation and air conditioning arrangement can be taken from the dependent claims.

According to a first aspect of the present invention, a ventilation and air conditioning arrangement, in particular for a recreational vehicle like a camper, caravan or mobile home, comprises an air intake arrangement, an air exhaust arrangement and an air conditioning unit. The air intake arrangement is configured to define an intake air flow path from the environment of a confined space into the confined space in an installed state of the ventilation and air conditioning arrangement. The air exhaust arrangement is configured to define an exhaust airflow path from the confined space to the environment of the confined space in an installed state of the ventilation and air conditioning arrangement. The air conditioning unit comprises a first heat exchanging unit and a second heat exchanging unit coupled to each other via a refrigerant circuit containing a refrigerant. The first heat exchanging unit is configured to transfer heat between intake air within the intake air flow path and the refrigerant. According to the present invention, the second heat exchanging unit is configured to transfer heat between the refrigerant and exhaust air within the exhaust air flow path and the refrigerant.

In other words, in accordance with the present invention not ambient air from the environment but the exhaust air from the confined space, which is already pre-tempered is used for temperature exchange with the second heat exchanging unit mainly. This results in an increased temperature exchange at the second heat exchanging unit and, thus, in an increased efficiency of the ventilation and air conditioning arrangement during air conditioning processes. In particular, for example during an air conditioning process in which the air within the confined space is to be cooled as compared to the air of the environment the configuration according to the present invention results in the following function. Hot air from the environment is guided through the intake air flow path where it is cooled by the first heat exchanging unit transferring heat from intake air to the refrigerant. At the same time, exhaust air from the confined space is guided through the exhaust air flow path into the environment. Within the exhaust air flow path, the second heat exchanging unit transfers heat from the heated refrigerant to the exhaust air. According to the basic concept of the present invention, the heat from the refrigerant is not transferred to the ambient air within the environment directly, but to the exhaust air within the exhaust air flow path. This results in an increased efficiency of the ventilation and air conditioning arrangement due to the fact that the exhaust air from the confined space not having the desired temperature within the confined space path is still lower than the temperature of the ambient air. Thus, the cooling power is recycled within the ventilation and air conditioning arrangement according to the present invention. Preferably, the air intake arrangement comprises an intake fan unit configured to force a flow of intake air through the intake air flow path in the installed state of the ventilation and air conditioning arrangement. Moreover or alternatively, the air exhaust arrangement comprises an exhaust fan unit configured to force a flow of exhaust air through the exhaust air flow path in the installed state of the ventilation and air conditioning arrangement. Such fan units allow an improved cooling, ventilation and/or heating efficiency.

Preferably, the ventilation and air conditioning arrangement comprises both of the intake fan unit and the exhaust fan unit as well as a control unit. The control unit is configured to control the air exchange between the confined space and the environment of the ventilation and air conditioning arrangement in the installed stated of the ventilation and air conditioning arrangement. The control unit has a balancing control state in which the control unit controls the intake fan unit and the exhaust fan unit in a manner in which the amount of intake air introduced through the air intake arrangement into the confined space corresponds to the amount of exhaust air deployed from the confined space through the air exhaust arrangement. Such a control unit allows a specific controlling of the ventilation and air conditioning arrangement.

Preferably, the ventilation and air conditioning arrangement comprises at least one modulating damper, the at least one modulating damper being coupled to and controlled by the control unit to control an amount of introduced intake air or deployed exhaust air. Moreover or alternatively, the intake fan unit and the exhaust fan unit are coupled to the control unit and the control unit is configured to control the rotation speed of a fan of the intake fan unit and of a fan of the exhaust fan unit. This configuration allows the user to control the air flows.

Preferably, the control unit is configured to be coupled to and/or is coupled to at least one sensor unit for determining a specific physical property of the air within the confined space and/or of the air within the environment. Such a configuration allows an automated control of the ventilation and air conditioning arrangement.

Preferably, the sensor unit is configured to comprise and/or comprises a temperature sensor, an oxygen sensor, a carbon dioxide sensor, a pressure sensor and/or a volatile organic compounds (VOC) sensor. These sensors are expedient examples for sensors resulting in highly functional overall configurations of the ventilation and air conditioning arrangement.

Preferably, the ventilation and air conditioning arrangement comprises the intake fan unit and/or the exhaust fan unit only, i.e. the ventilation and air conditioning arrangement comprises no further fan units for ventilation than the intake fan unit and/or the exhaust fan unit. Such a configuration is highly functional but allows to reduce the costs for the overall ventilation and air conditioning arrangement. Preferably, the first heat exchanging unit is an evaporator of the air conditioning unit and the second heat exchanging unit is a condenser of the air conditioning unit. Such a configuration results in a highly efficient cooling unit.

Preferably, the ventilation and air conditioning arrangement is configured such that the second heat exchanging unit is transferring heat just between the refrigerant and exhaust air within the exhaust air flow path, but not with other air flows. Thus, the increase of efficiency which is achieved with the present invention is maximized.

Preferably, the ventilation and air conditioning arrangement comprises a central control unit configured to control the operation mode of the ventilation and air conditioning arrangement and in particular of its components. The central control unit is configured to control the ventilation and air conditioning arrangement at least in a ventilation mode and an air conditioning mode. In the ventilation mode intake air is lead through the air intake arrangement to the confined space and exhaust air is led from the confined space through the air exhaust arrangement to the environment without the air conditioning unit being operated actively. In the air conditioning mode, the air conditioning unit is operated actively to heat or to cool the intake air lead from the environment into the confined space with the first heat exchanging unit and to cool or to heat the exhaust air led from the confined space into the environment with the second heat exchanging unit. Thus, it is possible to save energy if just ventilation is required. Preferably, the air intake arrangement comprises a hood-like cover member covering an inlet opening of the air intake arrangement and deflecting the flow of intake air at said inlet opening. Moreover or alternatively, the air exhaust arrangement comprises a hood-like cover member covering an outlet opening of the air exhaust arrangement and deflecting the flow of exhaust air at said outlet opening. Such a configuration improves the efficiency of the overall configuration further.

According to another aspect of the present invention, a recreational vehicle, in particular a camper, caravan or a mobile home, comprises at least one ventilation and air conditioning arrangement according to one of the preceding claims.

Thus, it is possible to take advantage of the above-described technical effects in the recreational vehicle.

### Description of the drawings

These and other features of the present invention will become more apparent from the following detailed description of a preferred but non-limiting exemplary embodiment of the present invention, with reference to the accompanying drawings, wherein:
FIG. 1 is a cross-sectional view of a ventilation and conditioning unit according to an exemplary embodiment of the present invention; and
FIG. 2 is another cross-sectional view of the ventilation and conditioning unit according to the exemplary embodiment of the present invention.

### Embodiment

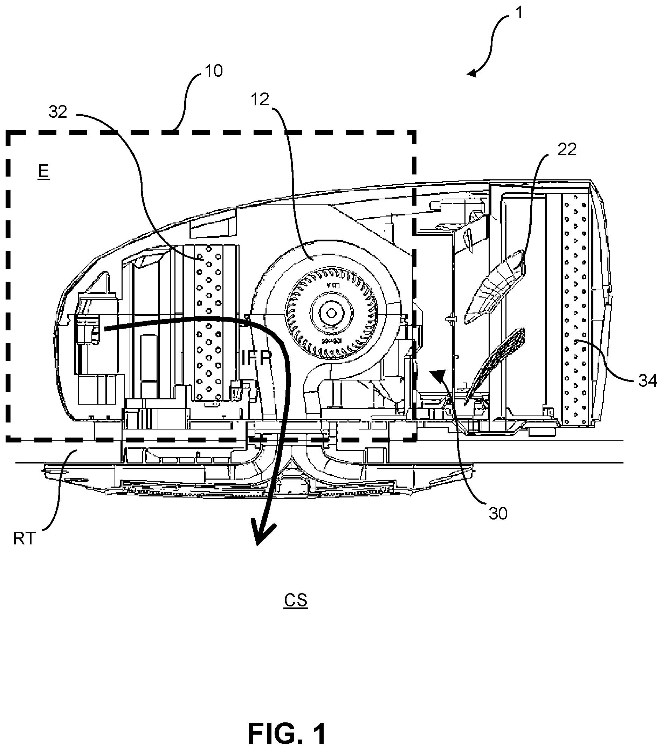

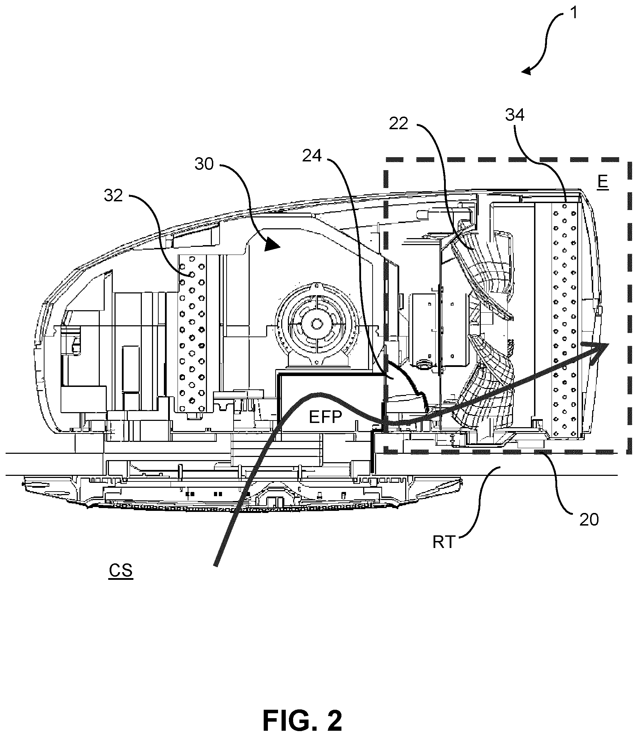

With reference to the accompanying drawings, a ventilation and air conditioning arrangement 1, in particular for a recreational vehicle like a camper, caravan or mobile home, comprises an air intake arrangement 10 (see FIG. 1) and an air exhaust arrangement 20 (see FIG. 2). The ventilation and air conditioning arrangement 1 further comprises an air conditioning unit 30. The air intake arrangement 10 defines an intake air flow path IFP. The intake air flow path IFP is provided from the environment E of a confined space CS into the confined space CS in an installed state of the ventilation and air conditioning arrangement 1. For example, in the installed state, the ventilation and air conditioning arrangement 1 is attached to the roof top RT of a recreational vehicle like a caravan, camper or mobile home. In such a case, the confined space CS is the inner of the recreational vehicle. The air exhaust arrangement 20 defines an exhaust air flow path EFP. The exhaust air flow path EFP is provided from the confined space CS to the environment E of the confined space CS in an installed state of the ventilation and air conditioning arrangement 1. The air conditioning unit 30 comprises a first heat exchanging unit 32 and a second heat exchanging unit 34. The first heat exchanging unit 32 and a second heat exchanging unit 34 are coupled to each other via a refrigerant circuit. The refrigerant circuit contains a refrigerant. The first heat exchanging unit 32 is configured to transfer heat between intake air within the intake air flow path IFP and the refrigerant. The second heat exchanging unit 34 is configured to transfer heat between the refrigerant and exhaust air within the exhaust air flow path EFP and the refrigerant. Accordingly, the already tempered exhaust air is used for heat transfer at the second heat exchanging unit 34 and, thus, to improve the overall energy efficiency of the ventilation and air conditioning arrangement 1.

The air intake arrangement 10 comprises an intake fan unit 12 configured to force a flow of intake air through the intake air flow path IFP. The air exhaust arrangement 20 comprises an exhaust fan unit 22 configured to force a flow of exhaust air through the exhaust air flow path EFP. The ventilation and air conditioning arrangement 1 further comprises a control unit (not illustrated). The control unit is configured to control the air exchange between the confined space CS and the environment E. Next to other states and modes of operation, the control unit has a balancing control state in which the control unit controls the intake fan unit 12 and the exhaust fan unit 22. In the balancing control state the control unit controls the intake fan unit 12 such that the amount of intake air introduced through the air intake arrangement 10 into the confined space CS corresponds to the amount of exhaust air deployed from the confined space CS through the air exhaust arrangement 20.

The ventilation and air conditioning arrangement 1 comprises at least one modulating damper for example in the form of a shutter configuration coupled to and controlled by the control unit. The modulating damper of the control unit is provided to control an amount of introduced intake air or deployed exhaust air. Furthermore, the intake fan unit 12 and the exhaust fan unit 22 are coupled to the control unit. The control unit controls the rotation speed of a fan of the intake fan unit 12 and of a fan of the exhaust fan unit 22. Furthermore, the control unit is coupled to a temperature sensor, an oxygen sensor, a carbon dioxide sensor, a pressure sensor and a volatile organic compounds (VOC) sensor and is configured to operate and control the various components of the ventilation and air conditioning arrangement 1 based on the signals received from the sensors. In the Figures, the various sensors are not illustrated explicitly.

In the illustrated embodiment, the first heat exchanging unit 32 is an evaporator of the air conditioning unit 30 and the second heat exchanging unit 34 is a condenser of the air conditioning unit 30, such that the ventilation and air conditioning arrangement 1 is configured to cool the intake air. The second heat exchanging unit 34 is transferring heat just between the refrigerant and exhaust air within the exhaust air flow path EFP, but not with ambient air from the environment E. This results in a highly efficient overall configuration of the ventilation and air conditioning arrangement 1 according to the present invention.

The provided control unit is a central control unit and is configured to switch the operation state of the various components of the ventilation and air conditioning arrangement 1 at least between a ventilation mode and an air conditioning mode. In the ventilation mode intake air is lead through the air intake arrangement 10 to the confined space CS and exhaust air is lead from the confined space CS through the air exhaust arrangement 10 to the environment E without the air conditioning unit 30 being operated actively. Thus, ventilation is caused without any active cooling or active heating in the ventilation mode. In the air conditioning mode, the air conditioning unit 30 is operated actively to heat or to cool the intake air lead from the environment E into the confined space CS with the first heat exchanging unit 32 and to cool orto heat the exhaust air led from the confined space CS into the environment E with the second heat exchanging unit 34. Thus, the cooled or heated air within the confined space CS is used to improve the temperature exchange at the second heat exchanging unit 34.

As can be seen in Fig. 2, the air exhaust arrangement 20 comprises a hood-like cover member 24 covering an outlet opening of the air exhaust arrangement 20 and deflecting the flow of exhaust air at said outlet opening. Such a configuration allows to reduce the flow speed of exhaust air at the second heat exchanging unit 34 and, thus, to increase the amount of transferred heat or temperature at the second heat exchanging unit 34. Although not illustrated here, such a hood-like cover is also provided within the intake air flow path IFP to increase the amount of transferred temperature at the first heat exchanging unit 32.

Finally, the present invention covers not just the described ventilation and air conditioning arrangement 1 but also a recreational vehicle like a caravan, camper or mobile home comprising such a ventilation and air conditioning arrangement 1.

It should be noted that the above-described configuration is preferred but merely exemplary for the present invention and does not limit the scope of protection as defined by the appended set of claims. A skilled artisan will be able to imagine various modifications of the above-described configuration without contravening the basic concept of the present invention or leaving the scope of protection as defined by the appended set of claims.

### REFERENCE SIGNS

- 1: ventilation and air conditioning arrangement
- 10: air intake arrangement
- 12: intake fan unit
- 20: air exhaust arrangement
- 22: exhaust fan unit
- 24: cover member
- 30: air conditioning unit
- 32: first heat exchanger
- 34: second heat exchanger

- CS: confined space
- E: environment
- EFP: exhaust air flow path
- IFP: intake air flow path
- RT: rooftop

## Claims

1. A ventilation and air conditioning arrangement (1), in particular for a recreational vehicle like a camper, caravan or mobile home, the ventilation and air conditioning arrangement (1) comprising:
an air intake arrangement (10) configured to define an intake air flow path (IFP) from the environment (E) of a confined space (CS) into the confined space (CS) in an installed state of the ventilation and air conditioning arrangement (1);
an air exhaust arrangement (20) configured to define an exhaust air flow path (EFP) from the confined space (CS) to the environment (E) of the confined space (CS) in an installed state of the ventilation and air conditioning arrangement (1); and
an air conditioning unit (30), wherein the air conditioning unit (30) comprises a first heat exchanging unit (32) and a second heat exchanging unit (34) coupled to each other via a refrigerant circuit containing a refrigerant;
wherein the first heat exchanging unit (32) is configured to transfer heat between intake air within the intake air flow path (IFP) and the refrigerant;
**characterized in that**
the second heat exchanging unit (34) is configured to transfer heat between the refrigerant and exhaust air within the exhaust air flow path (EFP) and the refrigerant.

2. The ventilation and air conditioning arrangement (1) according to claim 1, wherein the air intake arrangement (10) comprises an intake fan unit (12) configured to force a flow of intake airthrough the intake air flow path (IFP) in the installed state of the ventilation and air conditioning arrangement (1); and/or
the air exhaust arrangement (20) comprises an exhaust fan unit (22) configured to force a flow of exhaust air through the exhaust air flow path (EFP) in the installed state of the ventilation and air conditioning arrangement (1).

3. The ventilation and air conditioning arrangement (1) according to claim 2, wherein the ventilation and air conditioning arrangement (1) comprises both of the intake fan unit (12) and the exhaust fan unit (22), and
the ventilation and air conditioning arrangement (1) further comprises a control unit, wherein the control unit is configured to control the air exchange between the confined space (CS) and the environment (E) in the installed stated of the ventilation and air conditioning arrangement (1), wherein the control unit has a balancing control state in which the control unit controls the intake fan unit (12) and the exhaust fan unit (22) in a manner in which the amount of intake air introduced through the air intake arrangement (10) into the confined space (CS) corresponds to the amount of exhaust air deployed from the confined space (CS) through the air exhaust arrangement (20).

4. The ventilation and air conditioning arrangement (1) according to claim 3, wherein the ventilation and air conditioning arrangement (1) comprises at least one modulating damper, the at least one modulating damper (24) being coupled to and controlled by the control unit to control an amount of introduced intake air or deployed exhaust air; and/or
wherein the intake fan unit (12) and the exhaust fan unit (22) are coupled to the control unit and the control unit is configured to control the rotation speed of a fan of the intake fan unit (12) and of a fan of the exhaust fan unit (22).

5. The ventilation and air conditioning arrangement (1) according to any one of claims 2 to 4, wherein
the control unit is configured to be coupled to and/or is coupled to at least one sensor unit for determining a specific physical property of the air within the confined space (CS) and or of the air within the environment (E).

6. The ventilation and air conditioning arrangement (1) according to claim 5, wherein the sensor unit is configured to comprise and/or comprises a temperature sensor, an oxygen sensor, a carbon dioxide sensor, a pressure sensor and/or a volatile organic compounds (VOC) sensor.

7. The ventilation and air conditioning arrangement (1) according to any one of claims 2 to 6, wherein
the ventilation and air conditioning arrangement (1) comprises no further fan units for ventilation than the intake fan unit (12) and/or the exhaust fan unit (22).

8. The ventilation and air conditioning arrangement (1) according to any one of the preceding claims, wherein
the first heat exchanging unit (32) is an evaporator of the air conditioning unit (30) and the second heat exchanging unit (34) is a condenser of the air conditioning unit (30).

9. The ventilation and air conditioning arrangement (1) according to any one of the preceding claims, wherein
the ventilation and air conditioning arrangement (1) is configured such that the second heat exchanging unit (34) is transferring heat just between the refrigerant and exhaust air within the exhaust air flow path (EFP) and not with other air flows.

10. The ventilation and air conditioning arrangement (1) according to any one of the preceding claims, wherein
the ventilation and air conditioning arrangement (1) comprises a central control unit configured to control the operation mode of the ventilation and air conditioning arrangement (1) and in particular of its components,
wherein the central control unit is configured to control the ventilation and air conditioning arrangement (1) in a ventilation mode and an air conditioning mode,
wherein in the ventilation mode intake air is lead through the air intake arrangement (10) to the confined space (CS) and exhaust air is lead from the confined space (CS) through the air exhaust arrangement (20) to the environment (E) without the air conditioning unit (30) being operated actively, and
wherein in the air conditioning mode, the air conditioning unit (30) is operated actively to heat or to cool the intake air lead from the environment (E) into the confined space (CS) with the first heat exchanging unit (32) and to cool or to heat the exhaust air lead from the confined space (CS) into the environment (E) with the second heat exchanging unit (34).

11. The ventilation and air conditioning arrangement (1) according to any one of preceding claims, wherein
the air intake arrangement (10) comprises a hood-like cover member covering an inlet opening of the air intake arrangement (10) and deflecting the flow of intake air at said inlet opening, and/or wherein the air exhaust arrangement (20) comprises a hood-like cover member (24) covering an outlet opening of the air exhaust arrangement (20) and deflecting the flow of exhaust air at said outlet opening.

12. A recreational vehicle, in particular a camper, a caravan or a mobile home, comprising at least one ventilation and air conditioning arrangement (1) according to one of the preceding claims.
